(19) **Europäisches Patentamt European Patent Office Office européen des brevets**

(11) **EP 4 357 166 B1**

(12) **EUROPEAN PATENT SPECIFICATION**

(45) Date of publication and mention
of the grant of the patent:
**14.05.2025 Bulletin 2025/20**

(51) International Patent Classification (IPC):
**B29D 30/06** (2006.01)       **B60C 11/12** (2006.01)

(21) Application number: **23198332.1**

(52) Cooperative Patent Classification (CPC):
**B60C 11/1218; B29D 30/0606; B29D 2030/0613;
B60C 2011/1213**

(22) Date of filing: **19.09.2023**

(54) **PNEUMATIC TIRE AND TIRE MOLD**

LUFTREIFEN UND REIFENFORM

PNEUMATIQUE ET MOULE POUR PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.10.2022 JP 2022166141**

(43) Date of publication of application:
**24.04.2024 Bulletin 2024/17**

(73) Proprietor: **TOYO TIRE CORPORATION
Itami-shi,
Hyogo 6640847 (JP)**

(72) Inventors:
• **KAMADA, Nobuyuki**
  **Itami-shi, 6640847 (JP)**
• **SATO, Keisuke**
  **Itami-shi, 6640847 (JP)**

(74) Representative: **Balder IP Law, S.L.
Paseo de la Castellana 93
5ª planta
28046 Madrid (ES)**

(56) References cited:
**EP-A- 1 223 054       EP-A- 2 119 575
JP-A- 2004 210 043**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a pneumatic tire having a tread including blocks in which sipes are formed, and a tire mold for molding the pneumatic tire.

BACKGROUND

A pneumatic tire has a tread which is a portion that contacts a road surface. The tread includes a plurality of blocks. Each block has sipes formed therein. The sipes provide an edge effect and a water removing effect on icy and snowy roads. The sipes on the pneumatic tire are formed by using sipe blades arranged in a tire mold.
For example, JP 2003-118322 A discloses a technique of forming sipes such that the amplitude of a waveform of the sipe is gradually decreased from the block surface side toward the block bottom side in the tire radial direction. In addition, JP 2010-202009 A discloses a technique of forming depressions in a block surface of one of sipe walls and reducing a cross-sectional area of the depressions from the block surface side to the block bottom side in the tire radial direction.
However, the pneumatic tires disclosed in JP 2003-118322 A and JP 2010-202009 A have room for improvement in enhancing icy and snowy road performance. Here, the icy and snowy road performance refers to steering stability performance on snowy road surfaces and braking performance on frozen road surfaces. EP 2 119 575 A1 discloses a snow tire for improving steering and braking performance, the snow tire comprising a plurality of tread blocks, wherein sipes are formed in the plurality of the tread blocks in parallel each other in one direction to subdivide the tread blocks into a plurality of subblocks. JP 2004 210043A discloses a tire with a sipe having a projecting section projecting toward the circumference direction of the tire. EP 1 223 054 A1 discloses a tire running surface that comprises cutouts which form a zigzag or wavy tread pattern and incorporate the bounding surfaces of adjacent pointed body elements whose orientation alternates from cutout to cutout.

SUMMARY

In consideration of the above, an object of the present invention to provide a pneumatic tire and tire mold that can improve the icy and snowy road performance.
A pneumatic tire according to the present invention has a tread including a block in which a sipe is formed. In this pneumatic tire, at least one wall surface of the sipe is formed in a waveform including a plurality of curved portions when viewed from a tire radial direction. The curved portions include an inwardly curved portion that bulges toward the inside of the sipe and an outwardly curved portion that bulges toward the outside of the sipe. The inwardly curved portion and the outwardly curved portion have different radius of curvature.
The pneumatic tire according to the present invention can improve the icy and snowy road performance.

BRIEF DESCRIPTION OF DRAWINGS

Embodiments of the present invention will be described based on the following figures, wherein:

FIG. 1 is a schematic plane view showing blocks of a pneumatic tire according to an embodiment;

FIG. 2 is an enlarged view of a region A in FIG. 1;

FIG. 3 is an enlarged view of a region B in FIG. 2;

FIG. 4 is an enlarged view of a region B in FIG. 2 in driving and braking operation;

FIG. 5 is a schematic view showing a tire mold according to an embodiment; and

FIG. 6 is a perspective view showing a sipe blade according to the embodiment.

DESCRIPTION OF EMBODIMENTS

Embodiments of the present invention will be described in detail hereinafter. In the description below, specific shapes, materials, directions, numerical values, etc. are provided as illustrations for facilitating the understanding of the present invention, and can be appropriately changed according to applications, purposes, specifications, etc.

[Pneumatic Tire]

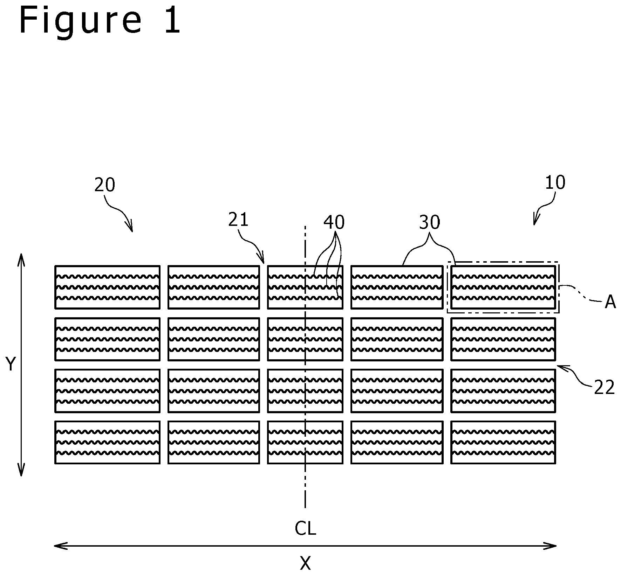

A pneumatic tire 10, which is an embodiment of the present invention, will be described with reference to FIG. 1.

As shown in FIG. 1, the pneumatic tire 10 has a tread 20 that includes blocks 30. The blocks 30 have sipes 40 formed therein. The pneumatic tire 10 can improve icy and snowy road performance (described in detail later).

Components of the pneumatic tire 10 will be described below with reference to a tire axial direction X, tire circumferential direction Y, and tire radial direction Z. The tire width may be described by using an equator CL with respect to the tire axial direction X.

The tread 20 is a portion of the pneumatic tire 10 that contacts a road surface. The tread 20 has a plurality of blocks 30 separated by major grooves 21 and minor grooves 22. Each of the plurality of blocks 30 is formed to have a rectangular shape. The blocks closer to the equator CL in a plan view have a smaller length in the tire axial direction X. The blocks 30 are arranged into lines in the tread 20. The shape of the block 30 is not limited to this, and the block 30 may have a rhombic or parallelogram shape, as long as the blocks 30 are separated by the major grooves 21 and the minor grooves 22.

The major groove 21 is a groove that extends along the tire circumferential direction Y. The major groove 21 is formed linearly along the tire circumferential direction Y. The minor groove 22 is a groove that extends along the tire axial direction X. The minor groove 22 is formed linearly along the tire axial direction X. It should be noted that the major groove 21 and the minor groove 22 of the present embodiment are not limited to these shapes, the major groove 21 may be formed at an angle to the tire circumferential direction Y, and the minor groove 22 may be formed at an angle to the tire axial direction X.

[Sipe]

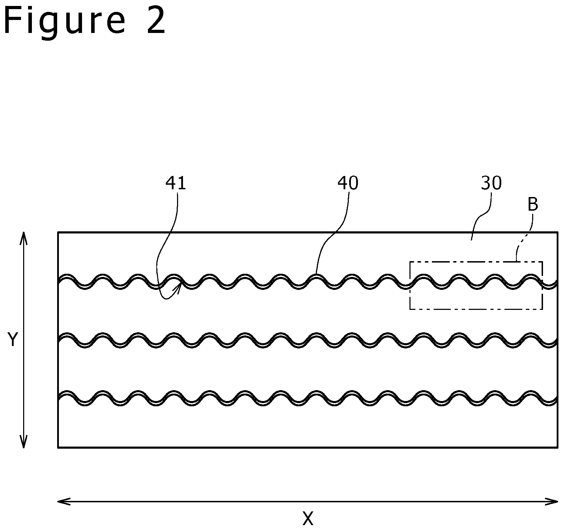

The sipes 40 will be described with reference to FIG. 2.

As shown in FIG. 2, the sipes 40 are formed in the block 30. The sipe 40 is a groove that extends along the tire axial direction X. Wall surfaces 41 of the sipe 40 are formed in a waveform along the tire axial direction X (described in detail below). For example, three sipes 40 are formed at equal intervals in the tire circumferential direction Y of the block 30. The depth of the groove of the sipe 40 is preferably 60 to 80% of the length of the block 30 in the tire radial direction Z.

The number and shape of the sipes 40 are not limited to those in the present embodiment, and three to five sipes 40 may be formed in the block 30. The sipes 40 may also be formed at an angle to the tire axial direction X. Furthermore, the sipes 40 may be open sipes that penetrate the sides of the block 30 or may be closed sipes that do not penetrate the sides of the block 30.

The sipes 40 soften the block 30 to increase the area of the surface that contacts with the road surface, and thereby increase friction with the road surface. The sipes 40 also provide an edge effect and a water removing effect on an icy and snowy road. The edge effect is the effect of increasing grip by scratching the surface of the icy and snowy road with the corners of the blocks 30 or the sipes 40. The water removing effect is the effect of capturing water in a gap in the sipe 40 when on the icy and snowy road.

[Waveform of Sipe]

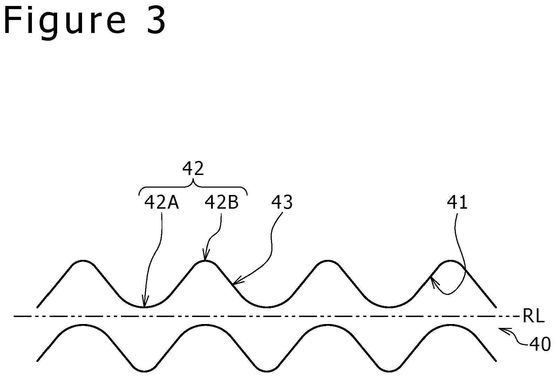

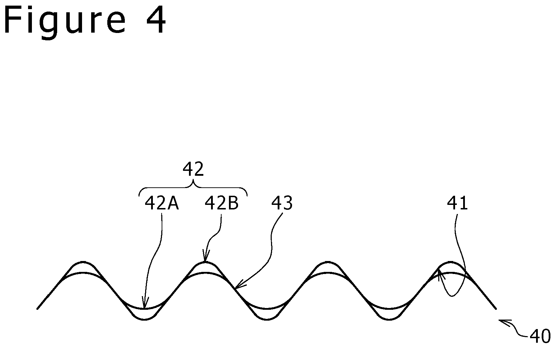

The waveform of the sipes 40 will be described with reference to FIGs. 3 and 4.

The wall surfaces 41 of the sipe 40 are formed in a waveform when viewed from the tire radial direction Z. In other words, the wall surfaces 41 of the sipe 40 are formed in a waveform in a cross-sectional view perpendicular to the tire radial direction Z. The wall surface 41 of the sipe 40 is a wall (surface) perpendicular to the tire circumferential direction Y of the sipe 40. Furthermore, the waveform of the wall surface 41 of the sipe 40 keeps the same shape from the block surface side to the block bottom side in the tire radial direction Z. By forming the wall surfaces 41 of the sipes 40 in a waveform, it is possible to improve the above edge effect.

Although, in the present embodiment, one wall surface 41 and the other wall surface 41 of the sipe 40 are formed in a waveform, this is not limiting. Only the one wall surface 41 of the sipe 40 may be formed in a waveform, or only the other wall surface 41 of the sipe 40 may be formed in a waveform.

More specifically, according to the invention, the wall surfaces 41 of the sipe 40 are formed in a waveform including a plurality of curved portions 42 when viewed from the tire radial direction Z. The plurality of curved portions 42 include inwardly curved portions 42A that bulge toward the inside of the sipe 40 and outwardly curved portions 42B that bulge toward the outside of the sipe 40. The inwardly curved portions 42A and the outwardly curved portions 42B are arranged alternately to form the waveform. A straight portion 43 is also formed between the inwardly curved portion 42A and the outwardly curved portion 42B.

In other words, when a reference line RL is drawn at the center of the width of the sipe 40 (length in the tire circumferential direction Y) along the longitudinal direction of the sipe 40, the inwardly curved portion 42A is the curved portion 42 that bulges toward the reference line RL and the outwardly curved portion 42B is the curved portion 42 that bulges toward the opposite side of the reference line RL.

The radii of curvature of the inwardly curved portion 42A and the outwardly curved portion 42B are formed to differ from each other. The radius of curvature of the inwardly curved portion 42A is formed to be larger than the radius of curvature of the outwardly curved portion 42B. Here, a larger radius of curvature indicates that the curve is gentler.

Assuming that the distance between the center of the inwardly curved portion 42A and the center of the outwardly curved portion 42B (pitch of the waveform) is P (mm), the thickness of the sipe 40 (length in the tire circumferential direction) is t (mm), and that the radius of curvature of the inwardly curved portion 42A is R1 (mm), the following expression holds:

$$[\text{Expression 1}] \qquad 0.5 * P - 0.5 * t \le R1 \le 0.6 * P$$

Here, if the radius of curvature R1 of the inwardly curved portion 42A is larger than 0.6 * P, the waveform becomes smaller and the binding force at the wall surfaces 41 of the sipe 40 becomes smaller, resulting in reduction in inclination prevention performance. In addition, if the radius of curvature R1 of the inwardly curved portion 42A is smaller than 0.5 * P - 0.5 * t, a gap between the inwardly curved portion 42A and the outwardly curved portion 42B becomes smaller, resulting in reduction in snow column shearing performance.

Assuming that the radius of curvature of the outwardly curved portion 42B is R2 (mm), the radius of curvature R2 is within the range of the following expression:

$$[\text{Expression 2}] \qquad 1.1 \le R1 / R2 \le 6.0$$

Furthermore, the radius of curvature R2 is preferably within the range of the following expression:

$$[\text{Expression 3}] \qquad 1.5 \le R1 / R2 \le 4.0$$

Here, if the gap between the inwardly curved portion 42A and the outwardly curved portion 42B becomes too large, the binding force at the wall surfaces 41 of the sipe 40 becomes small.

[Effects]

The pneumatic tire 10 can further improve the icy and snowy road performance when the wall surfaces 41 of the sipes 40 are formed in a waveform as described above.

More specifically, by forming the wall surfaces 41 of the sipe 40 in a waveform as described above, a slight gap is created between the inwardly curved portion 42A and the outwardly curved portion 42B as shown in FIG. 4 during driving and braking operation, and this can improve the water absorption performance and improve the snow column shearing performance. Snow column shearing force refers to the ability of the blocks 30 to compress snow to harden it, form columns of snow, and kick out the columns to provide a driving force. The snow column shearing force can thus improve the driving performance of the pneumatic tire 10 on snowy road surfaces.

Forming the wall surfaces 41 of the sipes 40 in a waveform as above also makes it possible to further increase the edge effect by the sipes 40 to thereby improve the braking performance on frozen road surfaces.

[Tire Mold]

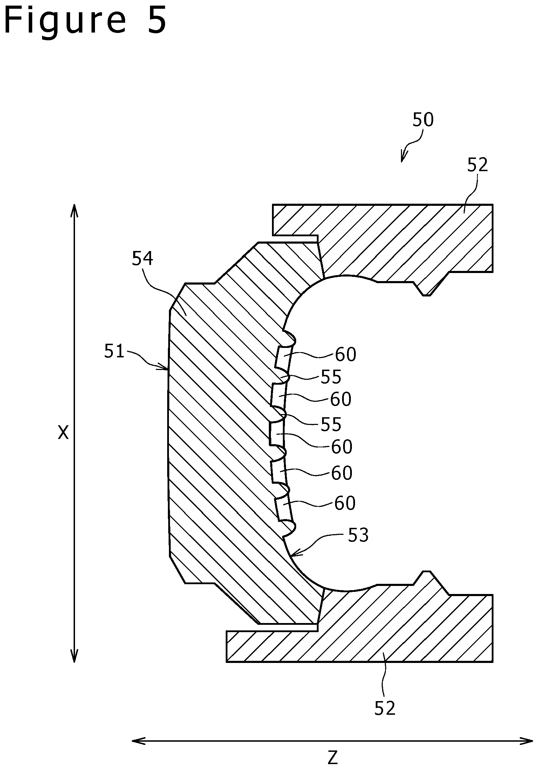

A tire mold 50, which is an embodiment of the present invention, will be described with reference to FIG. 5.

The mold 50 is a mold for forming the above pneumatic tire 10. The pneumatic tire 10 has the tread 20 including the blocks 30, in which the sipes 40 are formed as described above, and sidewalls (not shown) forming side surfaces. The mold 50 can be used to mold the pneumatic tire 10 that can improve the icy and snowy road performance.

Components of the mold 50 will be described below with reference to the tire axial direction X, the tire circumferential direction Y, and the tire radial direction Z of the above pneumatic tire 10 formed by the mold 50.

The mold 50 has a tread mold 51 for molding a surface of the tread 20 of the pneumatic tire 10 and a pair of side molds 52 for molding surfaces of the sidewalls.

The tread mold 51 has a body 54 having a tread forming surface 53, projections 55 protruding from the tread forming surface 53, and sipe blades 60 protruding from the tread forming surface 53 and provided between the projections 55.

The body 54 is made of a metallic material, such as aluminum alloy. The aluminum alloy preferably includes AC4 or AC7 aluminum, for example. The projections 55 are portions for molding the major grooves 21 in the pneumatic tire 10. The projections 55 are made of the same material as the body 54.

[Sipe Blade]

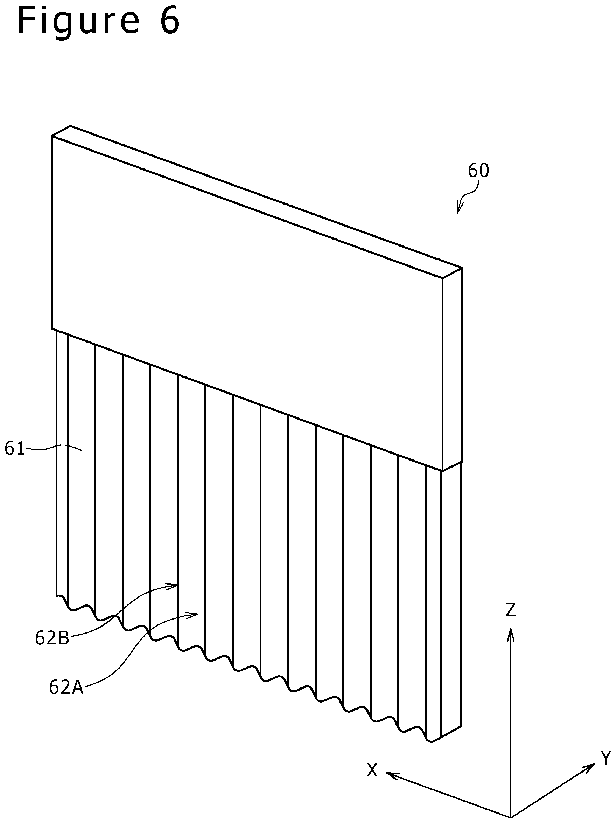

The sipe blade 60, which is an embodiment of the present invention, will be described with reference to FIG. 6.

The sipe blades 60 are provided for molding the sipes 40 in the pneumatic tire 10. The sipe blades 60 protrude in the tire radial direction Z from the tread forming surface 53 between the protrusions 55. The sipe blade 60 may be flat and made of a metallic material, such as stainless steel. The stainless steel preferably includes, for example, SUS303, SUS304, SUS630, and SUS631. When a three-dimensional molding machine is used, 17-4PH which is equivalent to SUS304L and SUS630 may be preferably used.

In general, a method of processing the sipe blade 60 includes forming the shape of the sipe blade 60 by using a press molding machine. To cause a change in shape of the sipe blade 60 in the thickness direction as in the sipe blade 60 of the present embodiment, the method may include cutting the sipe blade by machining. A three-dimensional molding machine may be used to make a complicated shape that is difficult to achieve by machining.

A side surface 61 of the sipe blade 60 is formed in a waveform when viewed from the tire radial direction Z. Furthermore, the waveform of the side surface 61 of the sipe blade 60 keeps the same shape from the block surface side to the block bottom side in the tire radial direction Z.

More specifically, the side surface 61 of the sipe blade 60 is formed in a waveform including a plurality of curved portions 62 when viewed from the tire radial direction Z. Here, the plurality of curved portions 62 include inwardly curved portions 62A that bulge toward the inside of the sipe blade 60 and outwardly curved portions 62B that bulge toward the outside of the sipe blade 60. The inwardly curved portions 62A and the outwardly curved portions 62B are arranged alternately to form the waveform.

The radii of curvature of the inwardly curved portion 62A and the outwardly curved portion 62B are formed to differ from each other. The radius of curvature of the inwardly curved portion 62A is formed to be larger than the radius of curvature of the outwardly curved portion 62B.

[Examples]

The present invention will be further described by using examples, but the present invention is not limited to these examples.

<Comparative Example 1>

A pneumatic tire B1 (tire size: 205/55R16, rim size: 16 * 6.5 JJ) with sipes was made such that each sipe has curved portions on its wall surfaces as shown in FIGs. 1 to 4. The thickness t of a sipe, the pitch P of a waveform of the wall surface of the sipe, the radius of curvature R1 of an inwardly curved portion, and the radius of curvature R2 of an outwardly curved portion are as follows:

Pitch of waveform P: 2.0 mm
Thickness of sipe t: 0.5 mm
Radius of curvature R1 of the inwardly curved portion: 0.75 mm
Radius of curvature R2 of the outwardly curved portion: 1.25 mm

<Comparative Example 2>

A pneumatic tire B2 was made in the same manner as Comparative Example 1, except that the radius of curvature R2 of the outwardly curved portion was changed.

Pitch of waveform P: 2.0 mm
Thickness of sipe t: 0.5 mm
Radius of curvature R1 of the inwardly curved portion: 0.75 mm
Radius of curvature R2 of the outwardly curved portion: 0.75 mm

<Example 1>

A pneumatic tire A1 was made in the same manner as Comparative Example 1, except that the radius of curvature R2 of the outwardly curved portion was changed.

Pitch of waveform P: 2.0 mm
Thickness of sipe t: 0.5 mm
Radius of curvature R1 of the inwardly curved portion: 0.75 mm
Radius of curvature R2 of the outwardly curved portion: 0.65 mm

<Example 2>

A pneumatic tire A2 was made in the same manner as Comparative Example 1, except that the radius of curvature R2 of the outwardly curved portion was changed.

Pitch of waveform P: 2.0 mm
Thickness of sipe t: 0.5 mm
Radius of curvature R1 of the inwardly curved portion: 0.75 mm
Radius of curvature R2 of the outwardly curved portion: 0.50 mm

<Example 3>

A pneumatic tire A3 was made in the same manner as Comparative Example 1, except that the radius of curvature R2 of the outwardly curved portion was changed.

Pitch of waveform P: 2.0 mm
Thickness of sipe t: 0.5 mm
Radius of curvature R1 of the inwardly curved portion: 0.75 mm
Radius of curvature R2 of the outwardly curved portion: 0.30 mm

<Example 4>

A pneumatic tire A4 was made in the same manner as Comparative Example 1, except that the radius of curvature R1 of the inwardly curved portion and the radius of curvature R2 of the outwardly curved portion were changed.

Pitch of waveform P: 2.0 mm
Thickness of sipe t: 0.5 mm
Radius of curvature R1 of the inwardly curved portion: 1.20 mm
Radius of curvature R2 of the outwardly curved portion: 0.30 mm

The pneumatic tires A1 to A4 and B1 and B2 were installed on all wheels of a test vehicle (front-wheel drive vehicle, displacement 2000cc) with an air pressure of 230 kPa, and steering stability performance on a snowy road surface and braking performance on a frozen road surface were evaluated by the following method. The evaluation results are shown in Table 1.

[Evaluation of Steering Stability Performance on Snowy Road Surface]

The steering stability performance was evaluated based on the driver's perception when the test vehicle was driven on a snowy road surface. The results were compared with steering stability performance of Comparative Example 1 and evaluated in seven levels: "much worse", "worse", "somewhat worse", "equal", "somewhat better", "better", and "much better".

[Evaluation of Braking Performance on Frozen Road Surface]

The above test vehicle was driven at 40 km/h on an icy road surface and then stopped, and the braking distance was measured until the vehicle speed of 0 km/h was reached. In the results, numerical values obtained by dividing the braking distances of Comparative Example 2 and Examples by the braking distance of Comparative Example 1 and multiplying the reciprocals of the obtained values by 100 are indicated as indexes. The larger the index, the better the braking performance on the frozen road surface.

[Table 1]

| | Comparative Example 1 | Comparative Example 2 | Example 1 | Example 2 | Example 3 | Example 4 |
|---|---|---|---|---|---|---|
| P | 2.0 | 2.0 | 2.0 | 2.0 | 2.0 | 2.0 |
| t | 0.5 | 0.5 | 0.5 | 0.5 | 0.5 | 0.5 |
| R1 | 0.75 | 0.75 | 0.75 | 0.75 | 0.75 | 1.2 |
| R2 | 1.25 | 0.75 | 0.65 | 0.5 | 0.3 | 0.3 |
| Steering Stability Performance on Snowy Road Surface | | Somewhat worse | Somewhat better | Better | Much better | Much better |
| Braking Performance on Frozen Road Surface | 100 | 101 | 102 | 103 | 103 | 101 |

Table 1 indicates that, although, in Comparative Example 1, a space between top portions of the inwardly and outwardly curved portions is closed, there is a gap between straight portions, and this causes the behavior of the blocks in the longitudinal direction of the sipe when the blocks are inclined.

In Comparative Example 2, the sipe inclination prevention effect is improved compared to Comparative Example 1, and thus the braking performance on the frozen road surface tends to be slightly better. On the other hand, because there are no gaps in the sipes, the water absorption performance and the snow column shear effect are not achieved.

In Examples 1 to 3, the edge effect is increased compared to Comparative Examples 1 and 2, and the braking performance on the frozen road surface is improved. In addition, due to gaps in the sipes, the water absorption performance and the snow column shearing effect are improved, resulting in improved steering stability performance on the snowy road surface.

Although, in Example 4, the force of supporting the sipe wall surfaces in the longitudinal direction to prevent inclination of the sipes is smaller, the edge effect is increased, and thus, the braking performance on the frozen road surface is equal to that in Comparative Example 2. Furthermore, although, due to larger gaps in the sipes, the water absorption performance and the snow column shearing effect are improved, the sipe inclination prevention effect is reduced, and thus, the steering stability performance on the snow surface is equal to that in Example 3.

The present invention is not limited to the above embodiments and variations thereof, and, as a matter of course, various modifications and improvements can be made within the scope of the appended claims.

**Claims**

1. A pneumatic tire (10) having a tread (20) comprising a block (30) in which a sipe (40) is formed, wherein

   at least one wall surface (41) of the sipe (40) is formed in a waveform including a plurality of curved portions (42) when viewed from a tire radial direction (Z),
   the curved portions (42) include an inwardly curved portion (42A) that bulges toward the inside of the sipe (40) and an outwardly curved portion (42B) that bulges toward the outside of the sipe (40), and
   the radii of curvature of the inwardly curved portion (42A) and the outwardly curved portion (42B) differ from each other,
   **characterized in that** a straight portion (43) is formed between the inwardly curved portion (42A) and the outwardly curved portion (42B).

2. The pneumatic tire (10) according to Claim 1, wherein the radius of curvature of the inwardly curved portion (42A) is larger than that of the outwardly curved portion (42B).

3. The pneumatic tire (10) according to Claim 1 or 2, wherein assuming that the pitch of the waveform is P (mm) which is the distance between the center of the inwardly curved portion (42A) and the center of the outwardly curved portion (42B), the thickness of the sipe (40) is t (mm), and that the radius of curvature of the inwardly curved portion (42A) is R1 (mm), the following expression holds:

$$[\text{Expression 1}] \qquad 0.5 * P - 0.5 * t \leq R1 \leq 0.6 * P$$

4. The pneumatic tire (10) according to Claim 3, wherein assuming that the radius of curvature of the outwardly curved portion (42B) is R2 (mm), the following expression holds:

$$[\text{Expression 2}] \qquad 1.1 \leq R1 / R2 \leq 6.0$$

5. A tire mold (50) with a sipe blade (60) for forming a sipe (40) in a block (30) of a tread (20) of a pneumatic tire (10), wherein

   at least one side surface (61) of the sipe blade (60) is formed in a waveform including a plurality of curved portions (62) when viewed from a tire radial direction (Z),
   the curved portions (62) include an inwardly curved portion (62A) that bulges toward the inside of the sipe blade (60) and an outwardly curved portion (62B) that bulges toward the outside of the sipe blade (60), and
   the radii of curvature of the inwardly curved portion (62A) and the outwardly curved portion (62B) differ from each other,
   **characterized in that** a straight portion is formed between the inwardly curved portion (62A) and the outwardly curved portion (62B).

**Patentansprüche**

1. Luftreifen (10) mit einer Lauffläche (20), die einen Block (30) aufweist, in dem eine Lamelle (40) ausgebildet ist, wobei

   mindestens eine Wandfläche (41) der Lamelle (40) in einer Wellenform ausgebildet ist, die von einer radialen Richtung (Z) des Reifens betrachtet eine Vielzahl von gekrümmten Abschnitten (42) aufweist,
   die gekrümmten Abschnitte (42) einen nach innen gekrümmten Abschnitt (42A), der sich zur Innenseite der Lamelle (40) wölbt, und einen nach außen gekrümmten Abschnitt (42B) aufweisen, der sich zur Außenseite der Lamelle (40) wölbt, und
   die Krümmungsradien des nach innen gekrümmten Abschnitts (42A) und des nach außen gekrümmten Abschnitts (42B) voneinander verschieden sind,
   **dadurch gekennzeichnet, dass**
   ein gerader Abschnitt (43) zwischen dem nach innen gekrümmten Abschnitt (42A) und dem nach außen gekrümmten Abschnitt (42B) ausgebildet ist.

2. Luftreifen (10) nach Anspruch 1, wobei der Krümmungsradius des nach innen gekrümmten Abschnitts (42A) größer ist als derjenige des nach außen gekrümmten Abschnitts (42B).

3. Luftreifen (10) nach Anspruch 1 oder 2, wobei unter der Annahme, dass der Scheitelabstand der Wellenform P (mm) ist, was dem Abstand zwischen der Mitte des nach innen gekrümmten Abschnitts (42A) und der Mitte des nach außen gekrümmten Abschnitts (42B) entspricht, die Dicke der Lamelle (40) t (mm) ist und der Krümmungsradius des nach innen gekrümmten Abschnitts (42A) R1 (mm) ist, der folgende Ausdruck gilt:

$$[\text{Ausdruck 1}] \qquad 0{,}5 * P - 0{,}5 * t \leq R1 \leq 0{,}6 * P.$$

4. Luftreifen (10) nach Anspruch 3, wobei unter der Annahme, dass der Krümmungsradius des nach außen gekrümmten Abschnitts (42B) R2 (mm) ist, der folgende Ausdruck gilt:

$$[\text{Ausdruck 2}] \qquad 1{,}1 \leq R1 / R2 \leq 6{,}0.$$

5. Reifenform (50) mit einem Lamellenmesser (60) zum Ausbilden einer Lamelle (40) in einem Block (30) einer Lauffläche (20) eines Luftreifens (10), wobei

   mindestens eine Seitenfläche (61) des Lamellenmessers (60) in einer Wellenform ausgebildet ist, die, aus einer radialen Richtung (Z) des Reifens betrachtet, eine Vielzahl von gekrümmten Abschnitten (62) aufweist,

wobei die gekrümmten Abschnitte (62) einen nach innen gekrümmten Abschnitt (62A), der sich zur Innenseite des Lamellenblatts (60) wölbt, und einen nach außen gekrümmten Abschnitt (62B) aufweisen, der sich zur Außenseite des Lamellenblatts (60) wölbt, und
die Krümmungsradien des nach innen gekrümmten Abschnitts (62A) und des nach außen gekrümmten Abschnitts (62B) voneinander verschieden sind,
**dadurch gekennzeichnet, dass**
zwischen dem nach innen gekrümmten Abschnitt (62A) und dem nach außen gekrümmten Abschnitt (62B) ein gerader Abschnitt ausgebildet ist.

## Revendications

1. Pneumatique (10) ayant une bande de roulement (20) comprenant un bloc (30) dans lequel est formée une lamelle (40), dans lequel :

   au moins une surface de paroi (41) de la lamelle (40) est formée dans une forme d'onde comprenant une pluralité de parties courbées (42) lorsqu'elles sont observées depuis une direction radiale du pneu (Z),
   les parties courbées (42) comprennent une partie courbée vers l'intérieur (42A) qui gonfle vers l'intérieur de la lamelle (40) et une partie courbée vers l'extérieur (42B) qui gonfle vers l'extérieur de la lamelle (40), et
   les rayons de courbure de la partie courbée vers l'intérieur (42A) et de la partie courbée vers l'extérieur (42B) diffèrent l'un de l'autre,
   **caractérisé en ce qu'**une partie droite (43) est formée entre la partie courbée vers l'intérieur (42A) et la partie courbée vers l'extérieur (42B).

2. Pneumatique (10) selon la revendication 1, dans lequel le rayon de courbure de la partie courbée vers l'intérieur (42A) est supérieur à celui de la partie courbée vers l'extérieur (42B).

3. Pneumatique (10) selon la revendication 1 ou 2, dans lequel en supposant que le pas de la forme d'onde est P (mm) qui est la distance entre le centre de la partie courbée vers l'intérieur (42A) et le centre de la partie courbée vers l'extérieur (42B), que l'épaisseur de la lamelle (40) est t (mm), et que le rayon de courbure de la partie courbée vers l'intérieur (42A) est R1 (mm), l'expression suivante est valable :

$$[\text{Expression 1}] \; 0{,}5 * P - 0{,}5 * t \leq R1 \leq 0{,}6 * P$$

4. Pneumatique (10) selon la revendication 3, dans lequel en supposant que le rayon de courbure de la partie courbée vers l'extérieur (42B) est R2 (mm), l'expression suivante est valable :

$$[\text{Expression 2}] \; 1{,}1 \leq R1 / R2 \leq 6{,}0$$

5. Moule de pneu (50) avec une lame de lamelle (60) pour former une lamelle (40) dans un bloc (30) d'une bande de roulement (20) d'un pneumatique (10), dans lequel

   au moins une surface latérale (61) de la lame de lamelle (60) est formée dans une forme d'onde comprenant une pluralité de parties courbées (62), lorsqu'elles sont observées depuis une direction radiale du pneu (Z),
   les parties courbées (62) comprennent une partie courbée vers l'intérieur (62A) qui gonfle vers l'intérieur de la lame de lamelle (60) et une partie courbée vers l'extérieur (62B) qui gonfle vers l'extérieur de la lame de lamelle (60), et
   les rayons de courbure de la partie courbée vers l'intérieur (62A) et de la partie courbée vers l'extérieur (62B) diffèrent l'un de l'autre,
   **caractérisé en ce qu'**une partie droite est formée entre la partie courbée vers l'intérieur (62A) et la partie courbée vers l'extérieur (62B).

# Figure 1

# Figure 2

EP 4 357 166 B1

# Figure 3

12

# Figure 4

# Figure 5

# Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003118322 A
- JP 2010202009 A
- EP 2119575 A1
- JP 2004210043 A
- EP 1223054 A1